# EUROPEAN PATENT APPLICATION

(11) **EP 3 693 890 A1**
(43) Date of publication of application: **12.08.2020**
(21) Application number: 20156209.7
(22) Date of filing: 07.02.2020
(51) Int. Cl.: G06K 9/00, G06K 9/46, G06K 9/62

(54) **REGIONALIZED CHANGE DETECTION USING DIGITAL FINGERPRINTS**

(30) Priority: 07.02.2019 US 201962802582 P; 05.02.2020 US 202016783126
(71) Applicant: Alitheon, Inc., Bellevue, WA 98004 (US)
(72) Inventor: SHANNON, Will Charles, Bellevue, WA Washington 98004 (US); QIAN, Cheng, Bellevue, WA Washington 98004 (US); ROSS, David Justin, Bellevue, WA Washington 98004 (US)
(74) Representative: Herre, Peter

(57) **Abstract**

A system and method detect a local change to a region of an object using digital fingerprints of the object acquired at a reference time and at a test time. The two digital fingerprints may be used to authenticate the object, a match density is calculated from a comparison of corresponding portions of the digital fingerprints and the match density is compared to a threshold so that when the match density is below the threshold, a region where a component on the object has been added, subtracted, repositioned, substituted, or altered is identified.

## Description

### RELATED APPLICATIONS

This application claims the benefit of U.S. Provisional Application No. 62/802,582, filed February 7, 2019 and U.S. Application No. 16/783,126 filed February 5, 2020.

### FIELD

The present disclosure generally relates to systems, devices, and methods useful to detect changes to an object over time. More particularly, but not exclusively, the present disclosure relates to generating, at different times, a plurality of digital fingerprints from digital data, such as digital image data, that corresponds to the object, and analyzing differences between different ones of the plurality of digital fingerprints.

### BACKGROUND

Currently, systems and methods exist that generate a digital fingerprint for an object based on an image of that object and the digital fingerprint may be used to authenticate and/or track the object. These systems may be used, for example, to identify an object, do inventory management and/or identify counterfeit objects. The systems may also perform multi-level authentication for an item under change in which the item may be packaged in several different packages and each stage of the packaging may be authenticated using digital fingerprints. Some systems require a template to be used for an object, such as a passport, in which each region of the passport such as a photograph, name, passport number, etc., must be correct for the object to be correct. The systems may also preserve authentication under item change. None of these systems, however, is able to detect, using digital fingerprints, regionalized changes in an object that is a technical problem not solved by known systems.

### BRIEF DESCRIPTION OF THE DRAWINGS

The invention is defined by the independent claims, taking due account of any element which is equivalent to an element specified in the claims. The dependent claims concern optional features of some embodiments of the invention. To enable the reader to realize one or more of the above-recited and other advantages and features of the present disclosure, a more particular description follows by reference to specific embodiments thereof which are illustrated in the appended drawings. Understanding that these drawings depict only typical embodiments of the disclosure and are not therefore to be considered limiting of its scope, the present disclosure will be described and explained with additional specificity and detail through the use of the accompanying drawings in which:
Fig. 1 is a simplified block diagram of one example of a system to detect and measure changes in physical objects using digital fingerprints;
Fig. 2 illustrates a method for determining a region of change of an object; and
Fig. 3 illustrates further details of the method for determining a region of change of an obj ect.

### DETAILED DESCRIPTION OF ONE OR MORE EMBODIMENTS

The device, method, and system embodiments described in this disclosure enable a proprietor of a particular physical object to know if the object has changed over time by the addition, subtraction, repositioning, or substitution of at least one component of the physical object in one or more regionalized areas of the object wherein each regionalized area may be an area of the object that is less than the entire object. It is often necessary or desirable to determine whether or not an object has changed from its prior state and, in many cases, to determine whether a component of the object has been added, subtracted, repositioned, substituted, or altered. The present disclosure teaches, among other things, a method of utilizing digital data (e.g., digital image) "match points" to measure and detect changes in a physical object.

Embodiments of the present disclosure describe the detection on (e.g., on, in, coupled to, integrated with, and the like) a physical object of a substitution of one component in a given location with another component, often unauthorized or for nefarious purposes. The teaching herein describes at least some embodiments that detect the substitution of components, sub-assemblies, or parts of an object.

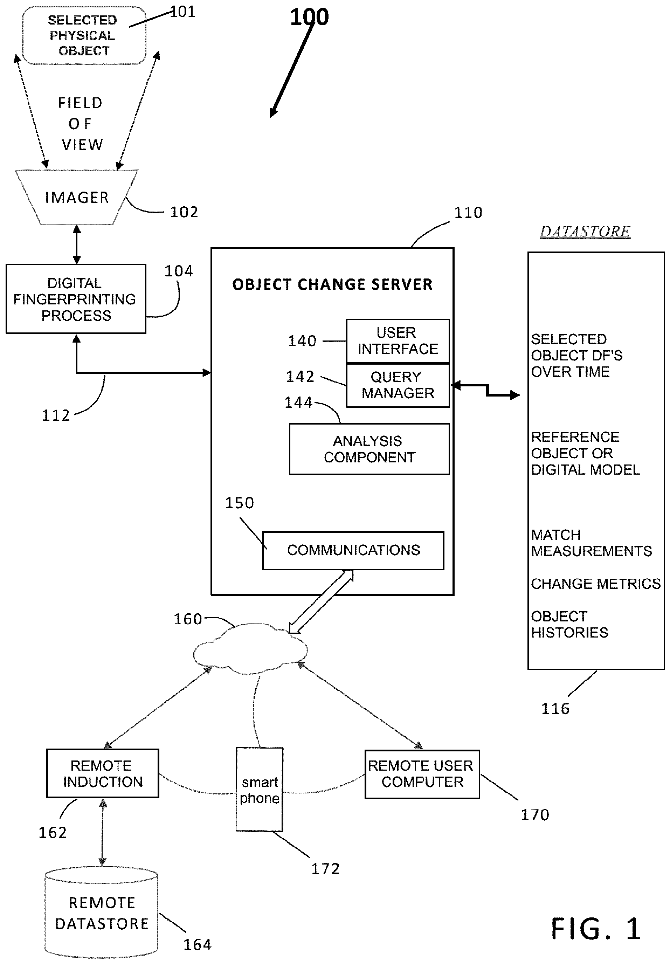

The system and method provide the ability of multiple users at different times and places to contribute to a conceptual map of where changes to an object occur, which may enable a better understanding of the history of the object and for that history to be recorded. For example, the system of Fig. 1 illustrates use of a remote system and smartphone (172) camera to capture image data of a physical object at virtually any time and location. Also, the taught system may enable the detection of places where, for example, excessive wear is occurring, thereby enabling possible fixes. Thus, the teachings of this disclosure may apply throughout a manufacturing process but also through any process (such as a distribution network) wherein the object is handled and may undergo intentional or unintentional change.

Figure 1 is a simplified block diagram of one example of a system 100 to detect and measure changes in physical objects using digital fingerprints. The system in Figure 1 may be used, for example, to detect regionalized change in a physical object 101 using the digital fingerprints. The system may also be used to detect if the object 101 has changed over time by the addition, subtraction, repositioning, or substitution of at least one component of the physical object, using the digital fingerprints.

A digital fingerprint is a computationally unique digital identifier of a physical object or a portion of a physical object. To the limitations of the available computational resources, each and every digital fingerprint identifying a determined portion of a physical object is different from each and every other digital fingerprint identifying a different physical object or identifying a different portion of the same physical object. And to the limitations of the available computational resources and the preservation of the determined portion of the physical object on which a first digital fingerprint is generated, each and every subsequent digital fingerprint identifying the same determined portion of the same physical object is statistically the same as the first digital fingerprint. In at least some cases, a digital fingerprint, as the term is used herein, is generated in a method that includes acquiring digital data (e.g., a digital image) corresponding to the physical object, finding points of interest within that digital data (e.g., generally, regions of disparity where "something" is happening, such as a white dot on a black background or the inverse), and characterizing those points of interest into one or more feature vectors extracted from the digital data. Characterizing the points of interest may include assigning image values, assigning or otherwise determining a plurality of gradients across the image region, or performing some other technique. The extracted feature vectors may or may not be analyzed or further processed. Instead, or in addition, the extracted feature vectors that characterize the points of interest in a region are aggregated, alone or with other information (e.g., with location information) to form a digital fingerprint.

In embodiments of the present disclosure, digital fingerprinting includes the creation and use of digital fingerprints derived from properties of a physical object. The digital fingerprints are typically stored in a repository such as a register, a physical memory, an array, a database, data store, or some other repository. Storing the digital fingerprint in the repository may include or in some cases be referred to as inducting the respective physical object into the repository.

Digital fingerprints, whether immediately generated or acquired from a repository, may be used to reliably and unambiguously identify or authenticate corresponding physical objects to an acceptable level of certainty, track the physical objects through supply chains, and record their provenance and changes over time. Many other uses of digital fingerprints are of course contemplated.

Digital fingerprints store information, preferably in the form of numbers or "feature vectors," that describes features that appear at particular locations, called points of interest, of a two-dimensional (2-D) or three-dimensional (3-D) object. In the case of a 2-D object, the points of interest are preferably on a surface of the corresponding object; in the 3-D case, the points of interest may be on the surface or in the interior of the object. In some applications, an object "feature template" may be used to define locations or regions of interest for a class of objects. The digital fingerprints may be derived or generated from digital data of the object which may be, for example, image data. While the data from which digital fingerprints are derived is often images, a digital fingerprint may contain digital representations of any data derived from or associated with the object. For example, digital fingerprint data may be derived from an audio file. That audio file in turn may be associated or linked in a repository (e.g., a database, data store, memory, or the like) to an object. Thus, in general, a digital fingerprint may be derived from a first object directly, or it may be derived from a different object (e.g., a file) linked to the first object, or a combination of two or more sources. In the audio example, the audio file may be a recording of a person speaking a particular phrase. The digital fingerprint of the audio recording may be stored as part of a digital fingerprint of the person speaking. The digital fingerprint (e.g., the digital fingerprint of the person) may be used as part of a system and method to later identify or authenticate that person, based on their speaking the same phrase, in combination with other sources.

Returning to the 2-D and 3-D object examples discussed herein, feature extraction or feature detection may be used to characterize points of interest. In an embodiment, this may be done in various ways. Two examples include Scale-Invariant Feature Transform (or SIFT) and Speeded Up Robust features (or SURF). Both are described in the literature. For example: "Feature detection and matching are used in image registration, object tracking, object retrieval etc. There are number of approaches used to detect and matching of features as SIFT (Scale Invariant Feature Transform), SURF (Speeded up Robust Feature), FAST, ORB etc. SIFT and SURF are most useful approaches to detect and matching of features because of it is invariant to scale, rotate, translation, illumination, and blur." MISTRY, Darshana et al., Comparison of Feature Detection and Matching Approaches: SIFT and SURF, GRD Journals-Global Research and Development Journal for Engineering I Volume 2 I Issue 4 I March 2017.

In an embodiment, features may be used to represent information derived from a digital image in a machine-readable and useful way. Features may comprise point, line, edges, blob of an image, etc. There are areas such as image registration, object tracking, and object retrieval etc. that require a system or processor to detect and match correct features. Therefore, it may be desirable to find features in ways that are invariant to rotation, scale, translation, illumination, and/or noisy and blurred images. The search of interest points from one object image to corresponding images can be very challenging work. The search may preferably be done such that the same physical interest points may be found in different views. Once located, points of interest and their respective characteristics may be aggregated to form a digital fingerprint, which may include 2-D or 3-D location parameters. In an embodiment, features may be matched, for example, based on finding a minimum threshold distance. Distances can be found using Euclidean distance, Manhattan distance, or other suitable metrics. If distances of two points are less than a prescribed minimum threshold distance, those key points may be known as matching pairs. Matching a digital fingerprint may comprise assessing a number of matching pairs, their locations, distance, or other characteristics. Many points may be assessed to calculate a likelihood of a match, since, generally, a perfect match will not be found. In some applications a "feature template" may be used to define locations or regions of interest for a class of objects.

In the example in Figure 1, the physical object 101 may be presented into the field of view of a suitable imager (scanner, camera, etc.) 102 to acquire image data about the physical object. The term "scan," in all of its grammatical forms, refers illustratively and without limitation to any and all means for capturing an image or set of images, which may be in digital form or transformed into digital form. Images may, for example, be two dimensional (2-D), three dimensional (3-D), or in the form of video. Thus a scan may refer to one or more images or digital data that defines such an image or images captured by a scanner, a camera, an imager, a 3D-sense device, a LiDAR-based device, a laser-based device, a specially adapted sensor or sensor array (e.g., a CCD array), a microscope, a smartphone camera, a video camera, an x-ray machine, a sonar, an ultrasound machine, a microphone (i.e., any instrument for converting sound waves into electrical energy variations), and the like. Broadly, any device that can sense and capture either electromagnetic radiation or a mechanical wave that has traveled through an object or reflected off an object, or any other means to capture surface or internal structure of an object, is a candidate to create a scan of an object. Various means to extract features from an object may be used. For example, features may be extracted through sound, physical structure, chemical composition, or many other means. Accordingly, while the term, images, and cognates of the term, images, are used to form the digital fingerprints described herein, the broader application of scanning technology will be understood by those of skill in the art. In other words, alternative means to extract features from an object should be considered equivalents within the scope of this disclosure. Along these lines, terms such as "scanner," "scanning equipment," and the like as used herein may be understood in a broad sense to refer to any equipment capable of carrying out scans, or to equipment that carries out scans, as part of their function.

Returning to Figure 1, the image data is input to a digital fingerprinting process 104 to form a digital fingerprint for the object 101 including various regions of the object and one or more components of the object. The digital fingerprinting process 104 may be integrated into the imager, stored in a server 110, etc. or it can be a remote process. The resulting set of one or more digital fingerprints are provided via path 112 to an object change server 110. Any suitable computer server can be provisioned to function as an object change server. It may be local or provisioned "in the cloud." In this example, the server 110 is coupled by its communications component 150 to a network 160 which may be LAN, WAN, internet, etc. Almost any digital networking hardware and communication protocols can be used. The server 110 may be implemented using cloud computing resources, blade servers, etc. and may have at least one processor and memory wherein the elements 140-144 of the server may be implemented as a plurality of lines of code/instructions that are executed by the processor of the server to implement the regionalized object change processes below. While the server 110 may be known, it is the regionalized object change processes that are unconventional and not well known in the industry and thus make the object change server with the regionalized object change processes unique.

The generation of the digital fingerprints may be known as "induction" and includes acts that include generating and storing, or otherwise acquiring access to, at least one digital fingerprint of a physical object, and storing the one or more digital fingerprints in a repository. Each stored digital fingerprint may be communicatively linked (i.e., associated) with other information related to the physical object. Hence, induction may also include acts that store additional information related to the physical object in a same or different repository. The additional information may be stored in association with any number of digital fingerprints. The association may include storing associated data in a common or shared repository record, communicatively linking one or more repository records together, or via other techniques known in the art to link information. For the sake of illustration and not limitation, induction may include storing one or more digital fingerprints in a new or existing repository record and further storing some other type of information, whether related to one or both of the physical object and the digital fingerprint, in a same or linked repository record.

Returning to Figure 1, the generation of the digital fingerprint of the object 101 occurs during the induction. Furthermore, the system 100 also may include a remote induction process 162 that may be provisioned and coupled to the server 110 via the network 160. This enables inducting, i.e., capturing image data of an object from a remote location, and adding the corresponding digital fingerprint of the remote object, to the server 110. The server 110 may store digital fingerprint in a coupled datastore 116, which again may be local or provisioned in the cloud. The object change server 110 can store data in the datastore 116 including digital fingerprint data, to accomplish the functions described herein. For example, the datastore can maintain individual (selected object) digital fingerprints, including multiple versions over time; reference object or digital fingerprints or digital models of an object.

The system may perform a matching process that can be carried out, for example, by an analysis component 144 that is part of the object change server 110. It may use a query manager 142 to access various records as needed in the datastore 116. Results such as match measurements, deterioration metrics, and object histories and be stored and update in the datastore 116. In one scenario, a remote user 170 may capture an object image using a smartphone 172. The image data can be used to generate a corresponding digital fingerprint, locally on the phone, or in the user system 170, or a remote induction component 162, or at the server 110. The object digital fingerprint can be stored in the datastore. It can be used to query the datastore to find a matching record from an earlier induction. It can be used to compare to that earlier record, to determine changes, and optionally to update the object history. The analysis component 144 of the object change server 110 may also perform a regionalized change detection process using digital fingerprints that can: 1) utilize digital data (e.g., digital image) "match points" to measure and detect changes in a physical object and in regionalized portions of the object; and 2) detect on (e.g., on, in, coupled to, integrated with, and the like) a physical object of a substitution of one component in a given location with another, often unauthorized or for nefarious purposes that, among other things, enables a proprietor of a particular physical object to know if the object has changed over time by the addition, subtraction, repositioning, or substitution of at least one component of the physical obj ect.

### REGIONALIZED CHANGE DETECTION PROCESS EMBODIMENTS

The present disclosure teaches, among other things, a method for automatic detection of localized or regionalized changes in an object using digital fingerprints generated from digital data such as high resolution images of the object. The first such generation is generally (although not necessarily) made when the object's provenance-and the provenance of its components-is known or assumed. While at least some specific examples (e.g., circuit boards) are described herein, the teachings of the present disclosure are of a general application. Although an induction digital data set (e.g., an induction image) and an authentication digital data set (e.g., an authentication image) may be referenced, it will be understood by one of ordinary skill in the art that multiple digital data sets (e.g., multiple images) may be collected in either situation and that authentication may be done many times across the object's life cycle. In at least one embodiment taught in this disclosure at least one first digital data set (e.g., at least one first digital image) of an object in its reference state (e.g., trusted state, original state, initial state, and the like) is acquired. For the sake of illustration and not limitation, an object in a reference state includes a state when the object is defined to be "correct." Subsequent to the time when the object was in its reference state, at least one second digital data set (e.g., at least one second digital image) of the object in a test state (e.g., suspect state, altered state, and the like) is acquired. For the sake of illustration and not limitation, an object in a test state includes a state when the object is at least suspected to be "altered," "changed," or otherwise "incorrect." The at least one first digital data set is acquired at a first time, and the at least one second digital data is acquired at a second time, and the second time is after the first time.

The first and second digital data sets are used for authentication/identification purposes. The present disclosure teaches embodiments that measure a disparity of match density between two or more digital data sets, and use of the disparity regionally as an indication of change (e.g., unwanted change) of the object of interest. The disclosure teaches, in a first embodiment, the generation of digital fingerprints from the digital data sets at any number of stages, and at any of these stages, an authentication event is performed, which involves comparing the digital fingerprints. As part of the comparison in the first embodiment, one or more regions are identified on the object (e.g., on, in, around, integrated with, and the like) where a match density to a determined threshold is tested. The comparison potentially (in the event, say, of a substitution of a component) identifies regions where the match density of the digital fingerprints is unexpectedly low. The regions of low match density may be indicative of regions where substitutions or other changes to the object have taken place. In a second embodiment, at the point of induction, at least two induction digital data sets (e.g., at least first and second induction digital images) of the object are acquired. In the embodiment, a first induction data set of the object is acquired (e.g., scanned, captured, input, retrieved, or the like) and processed to generate a first induction digital fingerprint, and a second induction data set of the object is acquired and processed to generate a second induction digital fingerprint. The first and second digital fingerprints are mathematically compared (by comparing points of interest in each digital fingerprint) to determine whether there are regions on the object that that have changed based on a difference (match density) between the at least digital fingerprints. In the case of a change in that region, the second fingerprint changes substantially in an isolated region (or regions) of the object.

This match information allows the discovery of "substituted" regions based on a change in the degree of match rather than a change in the digital fingerprint. Said a different way, the two different embodiments described herein include the generation of a single digital fingerprint at the original induction and measuring subsequent change from that single original digital fingerprint only. The second embodiment involves the generation of two original digital fingerprints, which includes, for example, generating a first and a second digital fingerprint at the original induction while provenance of the object is still known or assumed. Later, such as during the test phase, when substituted regions may have occurred on the object and the system generates a third digital fingerprint for comparison of two degrees of match, wherein the two degrees of match are a first degree of match formed by comparing the first digital fingerprint to the third digital fingerprint, and a second degree of match formed by comparing the first digital fingerprint to the second digital fingerprint. While the second embodiment is more complex, knowing the degree of match between two initial digital fingerprints may enhance the performance of the system in cases where there are regions on an object that do not digitally fingerprint well.

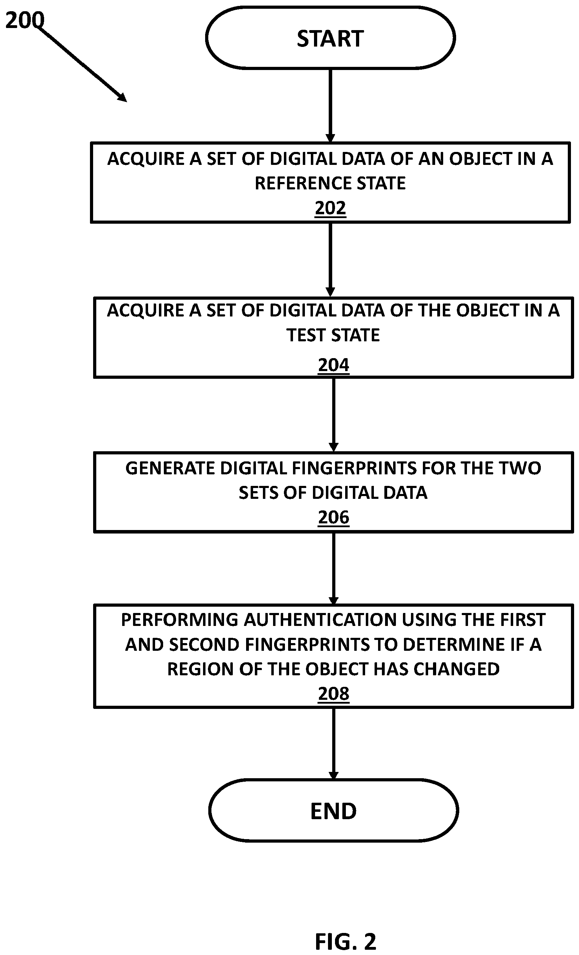

Fig. 2 illustrates a method 200 for determining a region of change of an object. The method shown in Figure 2 may be implemented by the system 100 in Figure 1, but also may be performed using other systems. In the method, a set of digital data about an object may be acquired (202) while the object is in a reference state. The reference state may be a state in which the object or a component of the object has not yet changed. For example, the reference state may be a first time that the set of digital data is acquired for the object. In more detail, this set of reference state digital data may have a set of key points (which may in some cases also be called points of interest) found on an object in its original state.

Optionally, a second digital data set having a set of key points may be acquired from the object while the object is still in its original/reference state. Although this second acquisition of digital data for the object in the reference state is optional, a second acquisition (e.g., a scan, capture, or the like of digital image data) can desirably enhance the contrast between missing matches and common points. When implemented, a second digital data set of the reference object may be used to perform a first match between the first digital data set of the object in its original state (0-A1) and a second digital data set of the object in its original state (0-A2). Based on the first match, any key points that weren't matched between the first and second digital data sets can be filtered out. The points that remain will then be considered to be the "expected match points" of the object. At least one digital fingerprint is generated from this second digital data set.

Returning to the method in Figure 2, a set of digital data of the object when the object is in a test state (204) may be acquired. The test state (also known as a suspect state or an altered state) is a state that occurs a period of time after the reference state in which the object or a component of the object may have changed and the method can determine if that change has occurred. The time when the test state data set is acquired is any time where the provenance is lost that occurs when loss of control of the object occurs. For example, if an object goes out for components to be added and then returns, the provenance has been lost. It is possible the company that added new components also added or substituted illicit ones. A digital fingerprint of the object at the reference state and a digital fingerprint of the object at the test state are generated (206). Each digital fingerprint may be generated based on the example set forth above or in other ways that are within the scope of the disclosure.

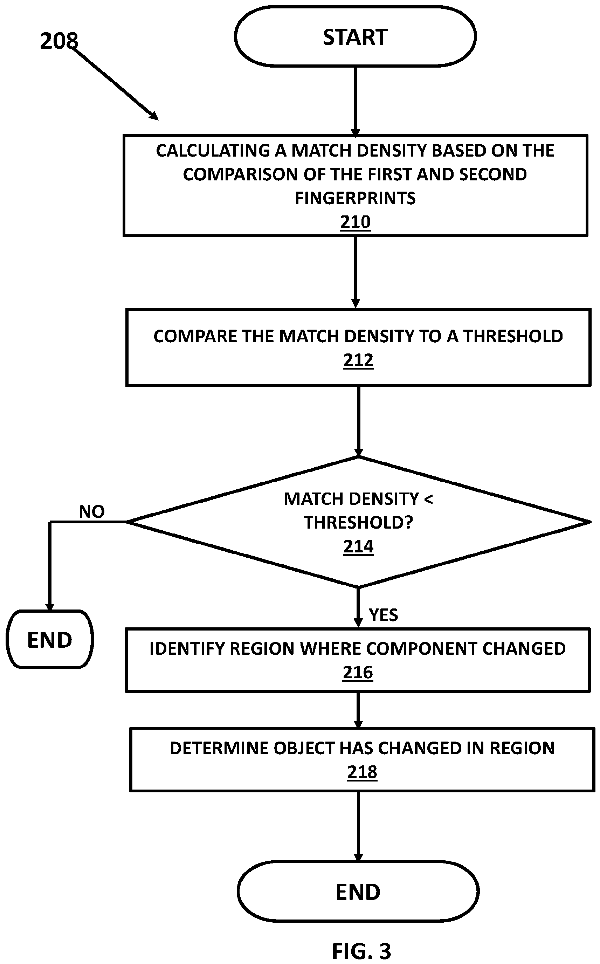

Using the reference state digital fingerprint and the test state digital fingerprint of the object, the method performs an authentication (208) process (described in more detail below with reference to Figure 3) to determine if a region of the object (for example with a component being removed, added, repositioned, substituted, damaged, or otherwise altered) has changed that may be used, for example, to enable a proprietor of a particular physical object to know if the object has changed over time by the addition, subtraction, repositioning, or substitution of at least one component of the physical object.

In at least one embodiment, regions of interest on an object are detected by comparing point densities for points detected anywhere in the digital data set (e.g., anywhere on a digital image). In this way, changes to the object may be automatically identified anywhere on an object, and the need for human intervention (including templating) in "guiding" the algorithms toward suspect areas on the object is reduced or eliminated. This teaching to automatically detect regions of change finds particular application when analyzing highly complex objects where the high volume and density of information makes it difficult to recognize or localize even human-visible changes. This teaching finds additional particular application in instances where manual templating or guidance may be impractical. The disclosure teaches a process, which may be an automated process, for detecting regions of change without requiring the formation or application of any templates to isolate the regions where detecting change is most beneficial. Although the teachings of this disclosure do not require a template, templates may nonetheless be useful in focusing the technology (e.g., digital data acquisition, a matching algorithm, and the like) on specific regions that have been determined to be high-importance regions or focusing the technology away from regions that have been determined to be unimportant regions (e.g., regions where there are no components to check).

In some cases, when analyzing the match points of an object, only looking at regions with low match density between a test digital fingerprint and a reference digital fingerprint can be potentially misleading. One reason for this is that low match density of regions on the object are naturally low in features (and therefore match points). To address this type of scenario, the teaching herein in at least some cases includes obtaining a first reference digital fingerprint of the object in its original state, or information derived from matching two or more reference digital fingerprints of the object in its original state. This technique preloads the system with knowledge on which regions of the object are or are not expected to have a large selection of points of interest. Once the system has this reference set of points of interest/matches of the object in its original state, any matches that occur when later-acquired test digital fingerprints are compared to the reference digital fingerprint information may be subtracted out in order to filter out common regions. In this way, only regions having points on the object that have been changed (e.g., removed, added, repositioned, substituted, damaged, or otherwise altered) are further processed.

In an alternative embodiment, it is possible to ensure that there are fewer (or no) regions or low point of interest density by forcing the distribution of points of interest on the object to be more or less uniform across the object. For example, in one method, a grid pattern is imposed on the object and the points of interests are located based on the grid. The grid spacing may be on the order of the area of potential alterations on the object and a number of points of interest per grid square may be defined. In this manner, n points of interest per grid square are determined that results in the more or less uniform distribution of the points of interest.

Fig. 3 illustrates further details of the method for determining a region of change of an object and in particular the authentication process 208 shown in Figure 2. During the authentication process, a match density may be calculated (210) that is based on the comparison of the reference state digital fingerprint and the test state digital fingerprint.

Throughout this disclosure, when points of interest are described as "matching" it is to be understood that they match "up to invariances" which depends on the type of invariance that the processing of the object achieves. Consider a dollar bill as an example. If an image of a dollar bill is always captured in the same orientation and with the same resolution, the common points of the dollar bill class will indeed be in very nearly the same location in each image. If, however, the bill may be imaged in any orientation, the location of the common points is "the same" after correcting for the degree of rotation between each member of the class. If the image can be captured at different resolutions, the common points are located in "the same location" up to a change in scale. Similar statements can be made for offset, Affine, Homography, Projective, Perspective, Rubber Sheet, and other variations. A point on one object is considered to be "in the same location" as a point on another object of the same class if, when a matching of digital fingerprints is performed, they are considered to be properly located for a match. In this description, when it is stated that two points on different class members are located in the same place, the "same place" should be understood to also include "up to invariances." The match density is then the number of matching points of interest in a region (a match density for that region.)

In one embodiment, the process to calculate the match density between the reference state digital fingerprint of the object and the test state digital fingerprint of the object may identify a plurality of points of interest that are found in both the reference state digital fingerprint and the test state digital fingerprint. The process also may determine a first value as a count of the points of interest that were found in both the reference state and test state digital fingerprints. The process then may form a resulting digital fingerprint that excludes the identified points of interest that are found in both of the reference state and test state digital fingerprints. The process may then determine a second value as a count of points of interest remaining in the resulting digital fingerprint and calculate the match density as a ratio formed by the first value and the second value.

The calculated match density may be compared to a threshold (212) that enables changes in a region of the object to be identified. During that comparison, it is determined if the match density is less than a threshold value (214). This part of the method is looking for regions where the match density should be high (indicating a region in which the digital fingerprints for the region(s) should be the same if the object has not changed and the match density is high) but where the match density is instead low (indicating a region in which the digital fingerprints for the region(s) do not match as closely indication that the region or a component of the object has changed.) In the method, match density expectations of high and low are relative to each other. For example, if an expected match density, in any unit of measure, is "10," then a determined match density of "8" may be considered "high," and a determined match density of "2" may be considered "low." In another example, if an expected match density, in any unit of measure, is "1000," then any determined match density above "500" may be considered "high," and any determined match density below "500" may be considered "low," Many other determinations are also contemplated to determine what is a high match density and what is a low match density. Areas where match density is unexpectedly low are in some cases identified as areas of potentially illicit modifications.

Thus, if the match density is equal to or greater than the threshold value (see examples above), then the region/object has not been changed and other regions in the object or other components of the object can be tested. If the match density is less than the threshold, the method identifies the region (that has the low match density) were the component is changed (216) based on the region of the object with the low match density and also determines that the object has changed in that region (218). The result of the determination of an object change in a region may be used to a variety of purposes some of which are described above. The method may also simply display the determination of the changed object to the user.

In one embodiment, the matching process 210 and matching density calculation may be performed between the reference state digital data set of object in its reference state (0-Al) and the test digital fingerprint of the object in its potentially altered state (A-A1) that results in a set of matching point being created. The matching points represent the common points between 0-A1 and A-Al. In order to see which points are not shared between the two digital fingerprints (i.e., the points that will indicate change), these common points are removed from the expected match point set and a mismatch point set is created, which represents points found only in the 0-A1 vs 0-A2 match and not found in the 0-A1 vs A-Al match set.

By including additional acquisitions of digital data sets of the object in its unaltered and/or altered states, the probability of finding and removing additional common points is increased, which may further enhance the contrast between altered and common regions.

In the embodiments and teaching described herein, none of the acquired digital data sets of an object will be identical to any other acquired digital data set, and there will always be some mismatches. However, the mismatch point set will exhibit a determined globally low density if there are no physical changes between the original and altered states of the object. Conversely, determined high density point clusters should be expected wherever few matches are found in an 0-A1 vs A-Al match since those mismatched points were not removed from the expected match point set. In the present embodiment discussed herein, one focus is on the ability to distinguish between regions with poor matching because a component of a physical object has been replaced, and regions where there are no distinguished points in the first place. One way of making this determination is by analyzing a map of points of interest in the originally acquired digital data set and measuring changes in density or by analyzing the density of matches between 0-A1 and 0-A2, or by some other means. Algorithms may be used (e.g., machine learning algorithms, algorithms that measure the density of remaining points, and the like) to establish bounding boxes around regions of relatively high point density in the mismatch set.

For each of the regions previously identified, the number of points found within that region is divided from the common point set (e.g., the set of matching points identified in act "3") by the corresponding number of points from the mismatch set within that region. If the resulting local ratio is:
1. very small (<1): this indicates a determination that, for this region, not many common points were found but many points from the mismatch set were found. This should only be there result if something was removed or altered (e.g., through damage or tampering) within this region in the digital data set (e.g., a digital image).
2. large (>1): this indicates a determination that nothing significant has changed between the two regions. In at least one theoretical case, it should be possible to entirely remove all common points in the mismatch set such that the ratios for common regions are infinitely high.. In at least one practical application, however, differences in acquisition conditions means that there will be many "should-be-common" points that are not filtered out because they are not seen often enough. The low-ratio regions are the areas where alterations made by component substitutions are suspected. It should be understood that local ratio may also have a value between the very small value and the large value.

Regarding the use of multiple images at induction and/or authentication. Although at least two digital data sets (e.g., at least two digital images) are analyzed in the embodiments described herein (i.e., one digital data set acquired under conditions of known provenance and one digital data set acquired at a later point in time under test conditions), there may be reasons for acquiring multiple digital data sets at one or the other or both times. The teaching herein includes one such reason based on the observation that different digital fingerprints of the same object will match better than the digital fingerprints of two very similar but different objects. As one example, it has been learned that digital fingerprints generated from different images of the same chip are more similar than digital fingerprints from two different chips of the same kind. Despite this reduction in match count, there nonetheless may be sufficient matches to spuriously match the objects. One embodiment of this disclosure takes multiple acquisitions when the object's provenance is known (or assumed) and removes key points from the reference digital fingerprint that do not match between said multiple acquisitions, thus reducing the likelihood of spurious matches against a substituted object.

The use of multiple acquisitions reduces the set of common points that need to be filtered out when comparing the inducted (original) digital fingerprints generated from the first acquired digital data set versus the test (potentially altered) digital fingerprints generated from the later acquired digital data set, and, because spurious matches are preferentially removed by the described teaching, the detection of change is enhanced. Along these lines, including additional acquisitions of digital data sets of the object when the object is being tested also helps in the identification of altered regions via the same removal from consideration of such spurious matches. 3D region isolation. In at least some examples described herein, digital data sets involve one or more two dimensional (2D) digital images to find the regions of suspected change. Such examples are not limiting. The teaching herein is applicable to techniques that acquire three-dimensional (3D) data sets of the object as well. Other multi-dimensional digital data sets and non-image digital data sets are also contemplated.

### ADDITIONAL EMBODIMENTS/USE CASES

### A. New Change Detection

In one embodiment, the teaching herein includes the detection of new (rather than missing or swapped) components on an object (e.g., on a surface of the object, in the object, integrated with the object, coupled to the object, and the like), such as the addition of an unexpected chip or chiplet to a circuit board. This is something that would be far more difficult if the use of templates were required since new components are liable to appear anywhere on the circuit board.

In one embodiment, the teaching herein includes digital data sets formed of medical images (x-rays, images of the skin, etc.). In this embodiment, the teaching includes detection of changes which are normally manually identified by a doctor or medical professional, such as broken bones or suspected cancerous areas or areas of any other type of abnormality.

### B. Change Tracking

In one embodiment, in a case where change is expected (i.e., the change is not a result of, for example, tampering by a bad actor), the teaching herein includes a progressive evolution of one or more digital fingerprints of an object as the object changes over time. In this case, authentication of the one or more evolved digital fingerprints is enabled even if all of the original constituent components have been altered or swapped out. By logging each change as it is detected, a history of alterations may be established (at least by location). If digital fingerprints of the individual components added have also been generated as part of a tracking process, the components may be identified as having been added.

### C. Object Finding

The teaching herein may be applied to collections of objects or a scene, including a random scene. A first digital data set of a scene or collection is acquired for original reference and later a second digital data set of the scene or collection is acquired at a time when an object or component may have been added or removed from the aggregation of the scene or collection. At least two scenarios are in view. The first scenario is one in which the position of the components of the scene or aggregation does not change between acquisitions. The second scenario is one where all or some of the objects may be moved around. In the former scenario, induction and testing of the digital fingerprints generated from the digital data sets of the scene may be done as if the acquisitions were collectively from a single image. In the second scenario, digital fingerprints generated from the digital data sets of each component would be inducted at a known provenance and later, in the test phase, the presence of each component would be examined, and missing and/or unexpected objects could be located using the teaching of this disclosure . Advantageously, in practical applications illustrated by at least some of the embodiments described herein, the teaching does not require the use of a template or any other indication of suspect parts, components, or other structures or locations in order to detect suspicious components; instead, suspicious regions are automatically detected, which allows the detection of changes in regions not highlighted by a template. Among other things the present teaching reduces or removes the consequences of error in a tem plating process. Another advantage is that the teaching described herein can be applied to any kind of object or aggregation of objects while requiring no significant changes to the process. Based on the teaching herein, any number of system embodiments are able to detect changes in a tractor just as easily as changes in a circuit board are detected.

As described herein, for simplicity, a user of the devices, systems, and methods may in some cases be described in the context of the male gender. It is understood that a user can be of any gender, and the terms "he," "his," and the like as used herein are to be interpreted broadly inclusive of all known gender definitions. As the context may require in this disclosure, except as the context may dictate otherwise, the singular shall mean the plural and vice versa; all pronouns shall mean and include the person, entity, firm or corporation to which they relate; and the masculine shall mean the feminine and vice versa. Unless defined otherwise, the technical and scientific terms used herein have the same meaning as commonly understood by one of ordinary skill in the art. Although any methods and materials similar or equivalent to those described herein can also be used in the practice or testing of the present invention, a limited number of the exemplary methods and materials are described herein. In the present disclosure, when an element (e.g., component, circuit, device, apparatus, structure, layer, material, or the like) is referred to as being "on," "coupled to," or "connected to" another element, the elements can be directly on, directly coupled to, or directly connected to each other, or intervening elements may be present. In contrast, when an element is referred to as being "directly on," "directly coupled to," or "directly connected to" another element, there are no intervening elements present.

The terms "include" and "comprise" as well as derivatives and variations thereof, in all of their syntactic contexts, are to be construed without limitation in an open, inclusive sense, (e.g., "including, but not limited to"). The term "or," is inclusive, meaning and/or. The phrases "associated with" and "associated therewith," as well as derivatives thereof, can be understood as meaning to include, be included within, interconnect with, contain, be contained within, connect to or with, couple to or with, be communicable with, cooperate with, interleave, juxtapose, be proximate to, be bound to or with, have, have a property of, or the like. Reference throughout this specification to "one embodiment" or "an embodiment" and variations thereof means that a particular feature, structure, or characteristic described in connection with the embodiment is included in at least one embodiment. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

In the present disclosure, the terms first, second, etc., may be used to describe various elements, however, these elements are not be limited by these terms unless the context clearly requires such limitation. These terms are only used to distinguish one element from another. For example, a first machine could be termed a second machine, and, similarly, a second machine could be termed a first machine, without departing from the scope of the inventive concept. The singular forms "a," "an," and "the" in the present disclosure include plural referents unless the content and context clearly dictates otherwise. The conjunctive terms, "and" and "or" are generally employed in the broadest sense to include "and/or" unless the content and context clearly dictates inclusivity or exclusivity as the case may be. The composition of "and" and "or" when recited herein as "and/or" encompasses an embodiment that includes all of the elements associated thereto and at least one more alternative embodiment that includes fewer than all of the elements associated thereto.

In the present disclosure, conjunctive lists make use of a comma, which may be known as an Oxford comma, a Harvard comma, a serial comma, or another like term. Such lists are intended to connect words, clauses or sentences such that the thing following the comma is also included in the list. The headings and Abstract of the Disclosure provided herein are for convenience only and do not interpret the scope or meaning of the embodiments.

The foregoing description, for purpose of explanation, has been described with reference to specific embodiments. However, the illustrative discussions above are not intended to be exhaustive or to limit the disclosure to the precise forms disclosed. Many modifications and variations are possible in view of the above teachings. The embodiments were chosen and described in order to best explain the principles of the disclosure and its practical applications, to thereby enable others skilled in the art to best utilize the disclosure and various embodiments with various modifications as are suited to the particular use contemplated.

The system and method disclosed herein may be implemented via one or more components, systems, servers, appliances, other subcomponents, or distributed between such elements. When implemented as a system, such systems may include an/or involve, inter alia, components such as software modules, general-purpose CPU, RAM, etc. found in general-purpose computers,. In implementations where the innovations reside on a server, such a server may include or involve components such as CPU, RAM, etc., such as those found in general-purpose computers.

Additionally, the system and method herein may be achieved via implementations with disparate or entirely different software, hardware and/or firmware components, beyond that set forth above. With regard to such other components (e.g., software, processing components, etc.) and/or computer-readable media associated with or embodying the present inventions, for example, aspects of the innovations herein may be implemented consistent with numerous general purpose or special purpose computing systems or configurations. Various exemplary computing systems, environments, and/or configurations that may be suitable for use with the innovations herein may include, but are not limited to: software or other components within or embodied on personal computers, servers or server computing devices such as routing/connectivity components, hand-held or laptop devices, multiprocessor systems, microprocessor-based systems, set top boxes, consumer electronic devices, network PCs, other existing computer platforms, distributed computing environments that include one or more of the above systems or devices, etc.

In some instances, aspects of the system and method may be achieved via or performed by logic and/or logic instructions including program modules, executed in association with such components or circuitry, for example. In general, program modules may include routines, programs, objects, components, data structures, etc. that perform particular tasks or implement particular instructions herein. The inventions may also be practiced in the context of distributed software, computer, or circuit settings where circuitry is connected via communication buses, circuitry or links. In distributed settings, control/instructions may occur from both local and remote computer storage media including memory storage devices.

The software, circuitry and components herein may also include and/or utilize one or more type of computer readable media. Computer readable media can be any available media that is resident on, associable with, or can be accessed by such circuits and/or computing components. By way of example, and not limitation, computer readable media may comprise computer storage media and communication media. Computer storage media includes volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical storage, magnetic tape, magnetic disk storage or other magnetic storage devices, or any other medium which can be used to store the desired information and can accessed by computing component. Communication media may comprise computer readable instructions, data structures, program modules and/or other components. Further, communication media may include wired media such as a wired network or direct-wired connection, however no media of any such type herein includes transitory media. Combinations of the any of the above are also included within the scope of computer readable media.

In the present description, the terms component, module, device, etc. may refer to any type of logical or functional software elements, circuits, blocks and/or processes that may be implemented in a variety of ways. For example, the functions of various circuits and/or blocks can be combined with one another into any other number of modules. Each module may even be implemented as a software program stored on a tangible memory (e.g., random access memory, read only memory, CD-ROM memory, hard disk drive, etc.) to be read by a central processing unit to implement the functions of the innovations herein. Or, the modules can comprise programming instructions transmitted to a general purpose computer or to processing/graphics hardware via a transmission carrier wave. Also, the modules can be implemented as hardware logic circuitry implementing the functions encompassed by the innovations herein. Finally, the modules can be implemented using special purpose instructions (SIMD instructions), field programmable logic arrays or any mix thereof which provides the desired level performance and cost.

As disclosed herein, features consistent with the disclosure may be implemented via computer-hardware, software and/or firmware. For example, the systems and methods disclosed herein may be embodied in various forms including, for example, a data processor, such as a computer that also includes a database, digital electronic circuitry, firmware, software, or in combinations of them. Further, while some of the disclosed implementations describe specific hardware components, systems and methods consistent with the innovations herein may be implemented with any combination of hardware, software and/or firmware. Moreover, the above-noted features and other aspects and principles of the innovations herein may be implemented in various environments. Such environments and related applications may be specially constructed for performing the various routines, processes and/or operations according to the invention or they may include a general-purpose computer or computing platform selectively activated or reconfigured by code to provide the necessary functionality. The processes disclosed herein are not inherently related to any particular computer, network, architecture, environment, or other apparatus, and may be implemented by a suitable combination of hardware, software, and/or firmware. For example, various general-purpose machines may be used with programs written in accordance with teachings of the invention, or it may be more convenient to construct a specialized apparatus or system to perform the required methods and techniques.

Aspects of the method and system described herein, such as the logic, may also be implemented as functionality programmed into any of a variety of circuitry, including programmable logic devices ("PLDs"), such as field programmable gate arrays ("FPGAs"), programmable array logic ("PAL") devices, electrically programmable logic and memory devices and standard cell-based devices, as well as application specific integrated circuits. Some other possibilities for implementing aspects include: memory devices, microcontrollers with memory (such as EEPROM), embedded microprocessors, firmware, software, etc. Furthermore, aspects may be embodied in microprocessors having software-based circuit emulation, discrete logic (sequential and combinatorial), custom devices, fuzzy (neural) logic, quantum devices, and hybrids of any of the above device types. The underlying device technologies may be provided in a variety of component types, e.g., metal-oxide semiconductor field-effect transistor ("MOSFET") technologies like complementary metal-oxide semiconductor ("CMOS"), bipolar technologies like emitter-coupled logic ("ECL"), polymer technologies (e.g., silicon-conjugated polymer and metal-conjugated polymer-metal structures), mixed analog and digital, and so on.

It should also be noted that the various logic and/or functions disclosed herein may be enabled using any number of combinations of hardware, firmware, and/or as data and/or instructions embodied in various machine-readable or computer-readable media, in terms of their behavioral, register transfer, logic component, and/or other characteristics. Computer-readable media in which such formatted data and/or instructions may be embodied include, but are not limited to, non-volatile storage media in various forms (e.g., optical, magnetic or semiconductor storage media) though again does not include transitory media. Unless the context clearly requires otherwise, throughout the description, the words "comprise," "comprising," and the like are to be construed in an inclusive sense as opposed to an exclusive or exhaustive sense; that is to say, in a sense of "including, but not limited to." Words using the singular or plural number also include the plural or singular number respectively. Additionally, the words "herein," "hereunder," "above," "below," and words of similar import refer to this application as a whole and not to any particular portions of this application. When the word "or" is used in reference to a list of two or more items, that word covers all of the following interpretations of the word: any of the items in the list, all of the items in the list and any combination of the items in the list.

Although certain presently preferred implementations of the invention have been specifically described herein, it will be apparent to those skilled in the art to which the invention pertains that variations and modifications of the various implementations shown and described herein may be made without departing from the spirit and scope of the invention. Accordingly, it is intended that the invention be limited only to the extent required by the applicable rules of law.

### Example Embodiments

Further examples of embodiments of the present invention are defined, without limitation, by the following Enumerated Example Embodiments (EEEs):
EEE1. A method, comprising:
   acquiring, at a first time, a digital data set of an object in a reference state;
   acquiring, at second time subsequent to the first time, a digital data set of the object in a test state;
   generating a reference state digital fingerprint from the reference state digital data set and a test state digital fingerprint from the test state digital data set;
   calculating a match density from a comparison of corresponding portions of the reference state and test state digital fingerprints of the object;
   comparing the match density to a threshold; and
   identifying, if the match density is below the threshold, a region where a component on the object has changed and determining that the object has been changed at the identified region.
EEE2. The method according to EEE1, wherein calculating the match density further comprises:
   identifying a plurality of points of interest that are found in both the reference state digital fingerprint and the test state digital fingerprint;
   determining a first value as a count of the points of interest that were found in both the reference state and test state digital fingerprints;
   forming a resulting digital fingerprint that excludes the identified points of interest that are found in both the reference state and test state digital fingerprints;
   determining a second value as a count of points of interest remaining in the resulting digital fingerprint; and
   calculating the match density as a ratio of the first value and the second value.
EEE3. The method according to EEE2, wherein calculating the match density further comprises identifying a plurality of regions of points of interest in the reference state and test state digital data sets and calculating a match density for each of the identified plurality of regions.
EEE4. The method according to EEE2 further comprising determining that the match density below one represents a determination that a component of the object has been added, subtracted, repositioned, substituted, or altered.
EEE5. The method according to EEE2 further comprising determining, based on the match density, that a component of the object has been added, subtracted, repositioned, substituted, or altered.
EEE6. The method according to EEE1 further comprising acquiring, for the object in the reference state, a second digital data set of the object in the reference state; computationally combining information from the reference state digital data set with information from the second reference state digital data set; and generating the reference state digital fingerprint from the computational combination of the reference and second reference digital data sets.
EEE7. The method of EEE6, wherein computationally combining the reference state and second reference state data set further comprises removing points in the reference state and second reference state data sets that match each other and generating a revised reference state digital fingerprint without the removed points.
EEE8. The method according to EEE1 further comprising acquiring, in the test state, a second digital data set of the object in the test state, computationally combining information from the test state digital data set with information from the second test state digital data set and generating the test state digital fingerprint from the computational combination of the second and fourth digital data sets.
EEE9. The method of EEE8, wherein computationally combining the test state and second test state data set further comprises removing points in the test state and second test state data sets that match each other and generating a revised test state digital fingerprint without the removed points.
EEE10. The method of EEE1 further comprising determining, if the match density is greater than the threshold, that the object has not been changed.
EEE11. The method of EEE1, wherein acquiring the test state digital data set further comprising determining that a change in the object has occurred and acquiring, at the second time subsequent to the first time, the digital data set of the object in the test state.
EEE12. A system, comprising:
   an imaging device that acquires, at a first time, a digital data set of an object in a reference state and acquires, at second time subsequent to the first time, a digital data set of the object in a test state;
   an object change server having a processor and memory and a plurality of lines of instructions that configure the processor to:
      generate a reference state digital fingerprint from the reference state digital data set and a test state digital fingerprint from the test state digital data set;
      calculate a match density from a comparison of corresponding portions of the reference state and test state digital fingerprints of the object;
      compare the match density to a threshold; and
      identify, if the match density is below the threshold, a region where a component on the object has changed and determining that the object has been changed at the identified region.
EEE13. The system according to EEE12, wherein processor is further configured to:
   identify a plurality of points of interest that are found in both the reference state digital fingerprint and the test state digital fingerprint;
   determine a first value as a count of the points of interest that were found in both the reference state and test state digital fingerprints;
   form a resulting digital fingerprint that excludes the identified points of interest that are found in both the reference state and test state digital fingerprints;
   determine a second value as a count of points of interest remaining in the resulting digital fingerprint; and
   calculate the match density as a ratio of the first value and the second value.
EEE14. The system of EEE13, wherein the processor is further configured to:
   Identify a plurality of regions of points of interest in the reference state and test state digital data sets and calculate a match density for each of the identified plurality of regions.
EEE15. The system of EEE13, wherein the processor is further configured to: determine that the match density below one represents a determination that a component of the object has been added, subtracted, repositioned, substituted, or altered.
EEE16. The system of EEE13, wherein the processor is further configured to: determine, based on the match density, that a component of the object has been added, subtracted, repositioned, substituted, or altered.
EEE17. The system of EEE12, wherein the processor is further configured to: acquire, for the object in the reference state, a second digital data set of the object in the reference state; computationally combine information from the reference state digital data set with information from the second reference state digital data set; and generate the reference state digital fingerprint from the computational combination of the reference and second reference digital data sets.
EEE18. The system of EEE17, wherein the processor is further configured to remove points in the reference state and second reference state data sets that match each other and generating a revised reference state digital fingerprint without the removed points.
EEE19. The system of EEE12, wherein the processor is further configured to acquire, in the test state, a second digital data set of the object in the test state, computationally combine information from the test state digital data set with information from the second test state digital data set and generate the test state digital fingerprint from the computational combination of the second and fourth digital data sets.
EEE20. The system of EEE19, wherein the processor is further configured to remove points in the test state and second test state data sets that match each other and generating a revised test state digital fingerprint without the removed points.
EEE21. The system of EEE12, wherein the processor is further configured to determine, if the match density is greater than the threshold, that the object has not been changed.
EEE22. The system of EEE12, wherein the processor is further configured to: determine that a change in the object has occurred and acquire, at the second time subsequent to the first time, the digital data set of the object in the test state.

While the foregoing has been with reference to a particular embodiment of the disclosure, it will be appreciated by those skilled in the art that changes in this embodiment may be made without departing from the principles of the disclosure, the scope of which is defined by the appended claims.

## Claims

1. A method, comprising:
generating a reference state digital fingerprint from a reference state digital data set and a test state digital fingerprint from a test state digital data set, wherein the reference state digital data set is acquired, at a first time, from an object in a reference state, and wherein the test state digital data set is acquired, at second time subsequent to the first time, from the object in a test state;
calculating a match density from a comparison of corresponding portions of the reference state and test state digital fingerprints of the object;
comparing the match density to a threshold; and
identifying, if the match density is below the threshold, a region where a component on the object has changed and determining that the object has been changed at the identified region.

2. The method according to claim 1, wherein calculating the match density further comprises:
identifying a plurality of points of interest that are found in both the reference state digital fingerprint and the test state digital fingerprint;
determining a first value as a count of the points of interest that were found in both the reference state and test state digital fingerprints;
forming a resulting digital fingerprint that excludes the identified points of interest that are found in both the reference state and test state digital fingerprints;
determining a second value as a count of points of interest remaining in the resulting digital fingerprint; and
calculating the match density as a ratio of the first value and the second value.

3. The method according to claim 2, wherein calculating the match density further comprises identifying a plurality of regions of points of interest in the reference state and test state digital data sets and calculating a match density for each of the identified plurality of regions.

4. The method according to claim 2 or claim 3 further comprising determining that the match density below one represents a determination that a component of the object has been added, subtracted, repositioned, substituted, or altered.

5. The method according to claim 2 or claim 3 further comprising determining, based on the match density, that a component of the object has been added, subtracted, repositioned, substituted, or altered.

6. The method according to any of claims 1-5 further comprising acquiring, for the object in the reference state, a second digital data set of the object in the reference state; computationally combining information from the reference state digital data set with information from the second reference state digital data set; and generating the reference state digital fingerprint from the computational combination of the reference and second reference digital data sets.

7. The method of claim 6, wherein computationally combining the reference state and second reference state data set further comprises removing points in the reference state and second reference state data sets that match each other and generating a revised reference state digital fingerprint without the removed points.

8. The method according to any of claims 1-7 further comprising acquiring, in the test state, a second digital data set of the object in the test state, computationally combining information from the test state digital data set with information from the second test state digital data set and generating the test state digital fingerprint from the computational combination of the second and fourth digital data sets.

9. The method of claim 8, wherein computationally combining the test state and second test state data set further comprises removing points in the test state and second test state data sets that match each other and generating a revised test state digital fingerprint without the removed points.

10. The method of any of claims 1-9 further comprising determining, if the match density is greater than the threshold, that the object has not been changed.

11. The method of any of claims 1-10, wherein acquiring the test state digital data set further comprising determining that a change in the object has occurred and acquiring, at the second time subsequent to the first time, the digital data set of the object in the test state.

12. A system, comprising:
an imaging device that is configured to acquire, at a first time, a digital data set of an object in a reference state and to acquire, at second time subsequent to the first time, a digital data set of the object in a test state;
an object change server having a processor and memory and a plurality of lines of instructions that configure the processor to perform the method of any of claims 1-11.

13. A computer program product with machine-readable instructions stored thereon that are executable on a processor, the instructions arranged to cause the processor to perform the method of any of claims 1-11.
